(19) Europäisches Patentamt
European Patent Office
Office européen des brevets

(11) **EP 1 751 574 B1**

(12) **FASCICULE DE BREVET EUROPEEN**

(45) Date de publication et mention
de la délivrance du brevet:
**19.10.2011 Bulletin 2011/42**

(51) Int Cl.:
***G01S 3/74*** (2006.01)

(21) Numéro de dépôt: **05733642.2**

(22) Date de dépôt: **25.04.2005**

(86) Numéro de dépôt international:
**PCT/EP2005/051842**

(87) Numéro de publication internationale:
**WO 2005/111650 (24.11.2005 Gazette 2005/47)**

(54) **PROCEDE DE LOCALISATION D'UN EMETTEUR AVEC UN RESEAU SYNTHETIQUE LACUNAIRE D'ANTENNES**

VERFAHREN ZUM VERFOLGEN EINES SENDERS MITTELS EINES SYNTHETISCHEN LÜCKENHAFTEN ANTENNENNETZWERKS

METHOD FOR TRACKING A TRANSMITTER BY MEANS OF A SYNTHETIC GAP ANTENNA NETWORK

(84) Etats contractants désignés:
**AT BE BG CH CY CZ DE DK EE ES FI FR GB GR HU IE IS IT LI LT LU MC NL PL PT RO SE SI SK TR**

(30) Priorité: **14.05.2004 FR 0405255**

(43) Date de publication de la demande:
**14.02.2007 Bulletin 2007/07**

(73) Titulaire: **THALES**
**92200 Neuilly sur Seine (FR)**

(72) Inventeurs:
• **HEURGUIER, Dominique,**
**Thales Intellectual Property**
**F-94117 CX Arcueil (FR)**
• **FERREOL, Anne,**
**Thales Intellectual Property**
**F-94117 CX Arcueil (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **ZHANG XIAOFEI ET AL: "Antenna array self-calibration algorithm with sensor location errors" IEEE, 28 octobre 2003 (2003-10-28), pages 225-228, XP010689438**

• **MARCOS S ET AL: "AN ADAPTIVE TRACKING ALGORITHM FOR DIRECTION FINDING AND ARRAY SHAPE ESTIMATION IN A NONSTATIONARY ENVIRONMENT" JOURNAL OF VLSI SIGNAL PROCESSING SYSTEMS FOR SIGNAL, IMAGE, AND VIDEO TECHNOLOGY, KLUWER ACADEMIC PUBLISHERS, DORDRECHT, NL, vol. 14, no. 1, octobre 1996 (1996-10), pages 107-118, XP000635061 ISSN: 0922-5773**
• **ALI M ET AL: "An algorithm for the calibration of sensor arrays with sensor gain and phase uncertainties" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, vol. VOL. 4, 27 avril 1993 (1993-04-27), pages 121-124, XP010110748 ISBN: 0-7803-0946-4**
• **GUSTAFSSON K ET AL: "Mitigation of wing flexure for airborne direction-finding applications" SIGNALS, SYSTEMS AND COMPUTERS, 1993. 1993 CONFERENCE RECORD OF THE TWENTY-SEVENTH ASILOMAR CONFERENCE ON PACIFIC GROVE, CA, USA 1-3 NOV. 1993, LOS ALAMITOS, CA, USA,IEEE COMPUT. SOC, 1 novembre 1993 (1993-11-01), pages 1083-1090, XP010096234 ISBN: 0-8186-4120-7**

**Description**

L'invention concerne un procédé de localisation d'un ou de plusieurs émetteurs fixes ou mobiles au sol à partir du défilement d'un porteur et d'un capteur embarqué produisant les vecteurs directeurs associés.

Il s'applique par exemple avec un réseau synthétique lacunaire d'antennes.

L'art antérieur décrit différentes méthodes pour localiser un ou plusieurs émetteurs à partir de porteurs défilant.

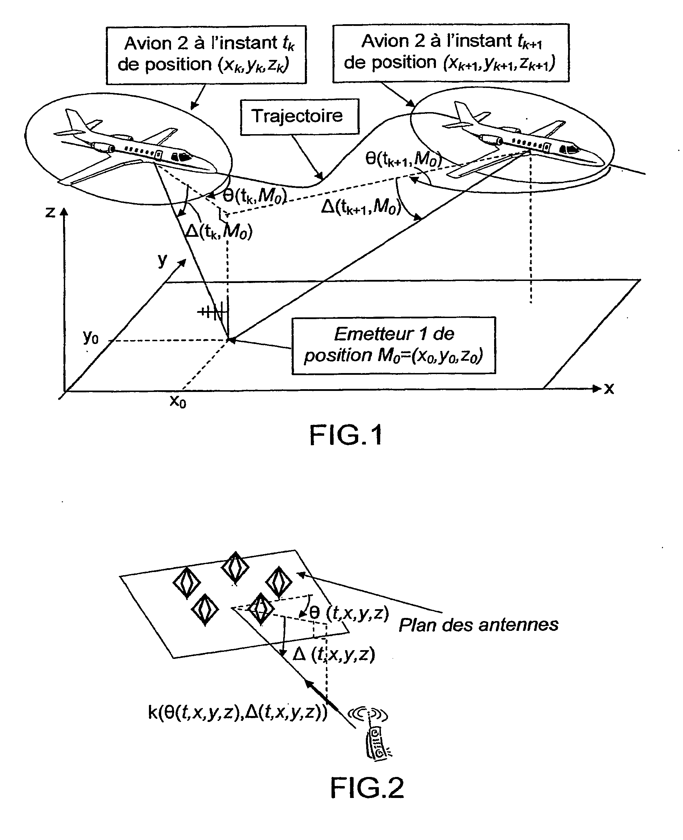

La figure 1 illustre un exemple de localisation aéroportée. L'émetteur 1 à localiser est à la position $(x_0,y_0,z_0)$ ; le porteur 2 à l'instant $t_k$ est à la position $(x_k,y_k,z_k)$ et voit l'émetteur sous l'incidence $(\theta(t_k,x_0,y_0,z_0), \Delta(t_k,x_0,y_0,z_0))$. Les angles $\theta(t,x_0,y_0,z_0)$ et $\Delta(t,x_0,y_0,z_0)$ évoluent au cours du temps et dépendent de la position de l'émetteur ainsi que de la trajectoire du porteur. Les angles $\theta(t,x_0,y_0,z_0)$ et $\Delta(t,x_0,y_0,z_0)$ sont par exemple repérés comme le montre la figure 2 par rapport à un réseau de N antennes pouvant être fixées sous le porteur.

Il existe actuellement plusieurs familles de techniques de localisation permettant de déterminer la position $(x_m, y_m,z_m)$ d'un émetteur à partir des vecteurs directeurs. Ces techniques de localisation diffèrent par les caractéristiques ou contraintes géométriques du réseau antennaire ; elles sont classées en plusieurs catégories citées ci-après.

**Utilisation de réseaux non ambigus, appairés, tarés et calibrés et de techniques de goniométrie**

Ces techniques sont dans la plupart des cas, basées sur une goniométrie 1 D en azimut. Les azimuts $\theta_{km}=\theta(t_k,x_m,y_m,z_m)$ associés au $m^{ième}$ émetteur sont mesurés pour différents instants $t_k$. En utilisant la position $(x_k,y_k,z_k)$ du porteur à cet instant k, on estime une position $(x_{mk},y_{mk},z_{mk})$ de cet émetteur par une intersection sol. La position $(x_k,y_k,z_k)$ du porteur est donnée par un GPS. Son orientation est donnée par un compas dans le cas d'un porteur terrestre, et par une centrale de navigation dans le cas d'un aéronef. A partir de toutes les positions $(x_{mk},y_{mk},z_{mk})$ on effectue une extraction de données permettant de déterminer la position dominante $(x_m,y_m,z_m)$ de l'émetteur incident. La localisation est obtenue par triangulation ou par intersection sol (goniométrie 2D). L'inconvénient des techniques de triangulation est qu'elles nécessitent un défilement important. D'autre part, en terme de contraintes antennaires, ces techniques de goniométrie doivent utiliser un réseau de capteurs non ambigu, et nécessitent une calibration, un appairage et un tarage des voies.

**Utilisation de réseau lacunaire d'antennes appairées**

La demande de brevet du demandeur FR 03/13128 décrit un procédé qui permet de réaliser une estimation directe de la position $(x_m,y_m,z_m)$ de l'émetteur à partir d'une analyse paramétrique multivoies des vecteurs directeurs à divers instants $t_k$ sur une durée $\Delta t$. Ce procédé requiert un appairage des voies ainsi qu'une correction des distorsions en phase et en amplitude des récepteurs.

Le document XP 010689438 intitulé « antenna array self calibration algorithm with sensor location errors » publié sous la référence IEEE, 28 octobre 2003 (2003-10-28), pages 225-228 divulgue un algorithme permettant à un réseau d'antennes d'effectuer une auto calibration, l'algorithme reposant sur une approche itérative.

Le document XP 000635061 intitulé « an adaptive Tracking Algorithm for Direction Finding and Array Shape Estimation in a Nonstationary Environment » disponible dans le journal of VLSI signal Processing Systems for Signal, Image and Video Technology, Kluwer Academic Publishers, Dordecht, NL, vol.14, n˚1, octobre 1996 (1996-10) décrit un algorithme de poursuite adaptatif pour estimer l'arrivée dans un cadre multisources et dans un environnement non stationnaire.

Le document XP 0101110748 intitulé « An algorithm for the calibration of sensor arrays with sensor gain and phase uncertainties » disponible dans la référence «Statistical Signal and Array Processing, Mineapolis, Apr.27-30, 1993, proceedings of the international conference on acoustics speech and signal processing (ICASSP) New York, IEEE, US vol.4, 27 avril 1993 concerne un algorithme de calibration non iterative.

Le document XP 010096234 intitulé «Mitigation of Wing Flexure for Airbone Direction-Finding Applications » publié pour la conférence Signals, Systems and Computers, 1993, Conference Record of the twenty-seventh simolar conference on pacific grove, CA, USA 1-3 nov.1993, Los Alamitos, CA, USA, IEEE Comput. Soc, 1 novembre 1993 pages 1083-1090 concerne un algorithme pour trouver la direction d'arrivée qui compense les variations dues notamment au mouvement des ailes d'un avion.

La présente invention repose sur une approche différente qui ne requiert pas, en fonctionnement normal, de correction des distorsions des récepteurs pourvu que le récepteur présente une réponse sensiblement constante sur les durées considérées de localisation.

L'invention concerne un procédé de localisation d'un ou de plusieurs émetteurs à partir d'un réseau de capteurs en mouvement par rapport aux émetteurs caractérisé en ce qu'il comporte au moins les étapes suivantes :

o déterminer les vecteurs directeurs $\hat{a}_k$ correspondant à la réponse du réseau de capteurs à une source d'incidence

$(\theta, \Delta)$ en fonction des paramètres d'incidence $\theta$, $\Delta$, et du paramètre $\rho$ lié à la distorsion des phases sur les capteurs, o transformer ce vecteur $\hat{a}_k$ afin d'éliminer le paramètre inconnu $\rho$, en un vecteur transformé $\hat{c}_{km}$, $\hat{c'}_{km}$ en exécutant les étapes suivantes :

choisir une voie ou capteur de référence et construire un vecteur $b(t_k, x_m, y_m, z_m, \rho)$ dont les composantes correspondent au rapport entre 2 voies,
$$\begin{bmatrix} (\rho_2 \mathbf{v}_2(\theta_k, \Delta_k))/(\rho_1 \mathbf{v}_1(\theta_k, \Delta_k)) \\ \vdots \\ (\rho_N \mathbf{v}_N(\theta_k, \Delta_k))/(\rho_1 \mathbf{v}_1(\theta_k, \Delta_k)) \end{bmatrix}$$

choisir un instant de référence et construire à partir du vecteur $b(t_k, x_m, y_m, z_m, \rho)$ un vecteur dont les composantes sont :

$$\hat{c}_{km} = \begin{bmatrix} \hat{\mathbf{b}}_{km}(1)/\hat{\mathbf{b}}_{im}(1) \\ \vdots \\ \hat{\mathbf{b}}_{km}(n)/\hat{\mathbf{b}}_{im}(n) \\ \vdots \\ \hat{\mathbf{b}}_{km}(N-1)/\hat{\mathbf{b}}_{im}(N-1) \end{bmatrix}$$

○ utiliser le vecteur transformé pour obtenir la position de l'émetteur en utilisant un critère de localisation maximisé, ledit critère étant un critère de corrélation vectorielle normalisé $L_k(x, y, z)$ dans l'espace $(x, y, z)$ de position d'un émetteur avec :

$$L_K(x,y,z) = \frac{\left| \mathbf{c}_K^H \mathbf{v}_{K,c}(x,y,z) \right|^2}{\left( \mathbf{c}_K^H \mathbf{c}_K \right) \left( \mathbf{v}_{K,c}(x,y,z)^H \mathbf{v}_{K,c}(x,y,z) \right)}$$

avec

$$\mathbf{c}_K = \begin{bmatrix} \mathbf{c}_{1m} \\ \vdots \\ \mathbf{c}_{Km} \end{bmatrix} = \mathbf{v}_{K,c}(x_m, y_m, z_m) + \mathbf{w}_K, \quad \mathbf{v}_{K,c}(x,y,z) = \begin{bmatrix} \mathbf{c}(t_1, x, y, z) \\ \vdots \\ \mathbf{c}(t_K, x, y, z) \end{bmatrix}$$

et

$$\mathbf{w}_K = \begin{bmatrix} \tilde{\mathbf{w}}_{1m} \\ \vdots \\ \tilde{\mathbf{w}}_{Km} \end{bmatrix}$$

vecteur de bruit pour toutes les positions de l'émetteur
○

Le procédé selon l'invention présente notamment les avantages suivants :

○ Il permet une estimation directe des positions de chacun des émetteurs à partir d'une analyse paramétrique multivoies à divers instants t,

○ Il permet d'utiliser des réseaux de capteurs lacunaires, non appairés, voire non calibrés (réseau à grande ouverture),

○ Il permet de s'affranchir de l'appairage ainsi que du tarage en amplitude et en phase des voies de réception,

○ Il est possible de prendre en compte un modèle sur la variation du niveau de réception du signal,

○ il permet d'introduire tout modèle d'observation déduit des vecteurs directeurs à des instants d'observation différents,

○ il est possible selon une variante de considérer l'ensemble des voies, sans prendre une voie particulière de référence.

D'autres caractéristiques et avantages de l'invention apparaîtront mieux à la lecture de la description qui suit d'un exemple donné à titre illustratif et nullement limitatif annexé des figures qui représentent :

○ La figure 1 un exemple de localisation d'un émetteur par un avion équipé d'un réseau de capteurs adaptés,

○ La figure 2 un réseau de 5 antennes et les angles d'incidence d'un émetteur.

Afin de mieux faire comprendre le principe mis en oeuvre dans la présente invention, l'exemple qui suit est donné à titre illustratif et nullement limitatif pour un système tel que schématisé à la figure 1, comprenant un avion 2 équipé d'un réseau de N capteurs et d'un processeur adapté à exécuter les étapes du procédé selon l'invention et d'un émetteur 1 au sol que l'on souhaite localiser.

En présence de $M$ émetteurs, l'avion reçoit à l'instant $t$ en sortie des $N$ capteurs du réseau, le vecteur $\mathbf{x}(t)$. Autour de l'instant $t_k$, le vecteur $\mathbf{x}(t+t_k)$ de dimension $N$x1 est le mélange des signaux des $M$ émetteurs :

$$\mathbf{x}(t+t_k) = \begin{bmatrix} x_1(t+t_k) \\ \vdots \\ x_N(t+t_k) \end{bmatrix} = \sum_{m=1}^{M} \mathbf{a}(\theta_{km}, \Delta_{km}, \boldsymbol{\rho}) \, s_m(t+t_k) + \mathbf{b}(t+t_k) = \mathbf{A}_k(\boldsymbol{\rho}) \, \mathbf{s}(t+t_k) + \mathbf{b}(t+t_k) \tag{1}$$

pour

$$|t| < \Delta t/2$$

○ où $\mathbf{b}(t)$ est le vecteur bruit supposé gaussien,
○ $\mathbf{a}(\theta, \Delta, \rho)$ est la réponse du réseau de capteurs à une source d'incidence $(\theta, \Delta)$ avec des gains récepteur complexes,
○ $\rho$ est un paramètre représentatif de la distorsion de phase sur les différentes voies de réception, $\rho = [\rho_1 \ldots \rho_N]T$,
○ $\mathbf{A}_{\kappa\pi} = [\alpha(\theta_{\kappa 1}, \Delta_{\kappa 1}, \rho) \ldots, \alpha(\theta_{\kappa M}, \Delta_{\kappa M}, \rho)]$, $\sigma(\tau) = [\sigma_1(\tau) \ldots \sigma_M(\tau)]^T$, $\theta_{\kappa\mu} = \theta(\tau_\kappa, \xi_\mu, \psi_\mu, \zeta_\mu)$ et $\Delta_{km} = \Delta(t_k, x_m, y_m, z_m)$ et $x_n(t)$ est le signal reçu sur le $n^{\text{ième}}$ capteur.

On remarque que dans ce modèle, la matrice $\mathbf{A}_{kp}$ de mélange dépend de l'instant $t_k$ d'observation ainsi que des gains des récepteurs $\rho$.
Le vecteur directeur $\mathbf{a}(\theta, \Delta, \rho)$ et le vecteur directeur sans distorsion de phase $\mathbf{v}(\theta, \Delta)$ ont respectivement pour expressions :

$$\mathbf{a}(\theta, \Delta, \boldsymbol{\rho}) = \begin{bmatrix} \rho_1 \, a_1(\theta, \Delta) \\ \vdots \\ \rho_N \, a_N(\theta, \Delta) \end{bmatrix} \text{ et } \mathbf{v}(\theta, \Delta) = \begin{bmatrix} a_1(\theta, \Delta) \\ \vdots \\ a_N(\theta, \Delta) \end{bmatrix} \tag{2}$$

Où:

- **a**(θ, Δ, ρ) est la réponse du réseau de capteurs à une source d'incidence (θ,Δ),
- **v**(θ, Δ) est le directeur sans distorsion pour une source d'incidence (θ,Δ)
- **A** $_k$(ρ)=[**a**(θ$_{k1}$, Δ$_{k1}$, ρ)... **a**(θ$_{kM}$, Δ$_{kM}$, ρ)],
- θ$_k$=θ(t$_k$,x$_m$,y$_m$,z$_m$) et Δ$_k$=Δ(t$_k$,x$_m$,y$_m$,z$_m$).

Ces vecteurs **a**(θ$_{km}$, Δ$_{km}$, ρ) ont la particularité de dépendre de l'instant $t_k$ et de la position (x$_m$,y$_m$,z$_m$) de l'émetteur.

**Vecteur directeur akm**

En présence d'erreurs de modèle, par exemple le couplage, le vecteur directeur mesuré **â**$_{km}$(ρ)peut s'écrire :

$$\hat{\mathbf{a}}_{km}(\rho) = \mathbf{a}(\theta(t_k,x_m,y_m,z_m),\ \Delta(t_k,x_m,y_m,z_m),\ \rho) + \mathbf{e}_{km} \quad \text{avec} \tag{3}$$

avec **e**$_{km}$: bruit de mesure complexe dépendant des erreurs de calibration tel que le couplage.

En particulier pour un réseau composé de *N*=2 capteurs espacés d'une distance de *d* dans l'axe du porteur le vecteur directeur sans distorsion **v**$_{km}$ à l'instant k vérifie :

$$\mathbf{v}_{km} = \left[ \begin{array}{c} 1 \\ \exp\left( j2\pi \dfrac{d}{\lambda} \cos(\theta(t_k, x_m, y_m, z_m)) \cos(\Delta(t_k, x_m, y_m, z_m)) \right) \end{array} \right] = \mathbf{v}(t_k,x_m,y_m,z_m) \tag{4}$$

L'incidence (θ($t_k$,x$_m$,y$_m$,z$_m$), Δ($t_k$,x$_m$,y$_m$,z$_m$)) peut être directement calculée à partir de la position (x$_m$,y$_m$,z$_m$) du porteur à l'instant $t_k$ et de la position (x$_m$,y$_m$,z$_m$) de l'émetteur.

L'idée de base du procédé repose notamment sur le fait que le paramètre p est indépendant de l'incidence (θ, Δ) des sources, le vecteur p n'étant pas estimé par tarage ou par toute autre méthode avant ou en cours de fonctionnement normal du système.

**Première variante de mise en oeuvre du procédé utilisant des vecteurs c$_{km}$**

Selon une première variante de réalisation, le procédé utilise le vecteur directeur suivant :

$$\hat{\mathbf{a}}_{km}(\rho) = \mathbf{a}(\theta_k,\ \Delta_k,\ \rho) + \mathbf{e}_{km} \tag{5}$$

Il construit le vecteur $\hat{b}_{km}$ de dimension (N-1)*1 en choisissant un capteur de référence, par exemple le capteur d'indice 1.

$$\hat{b}_{km} = \left[ \begin{array}{c} \hat{\mathbf{a}}_{km}(2)/\hat{\mathbf{a}}_{km}(1) \\ \vdots \\ \hat{\mathbf{a}}_{km}(n)/\hat{\mathbf{a}}_{km}(1) \\ \vdots \\ \hat{\mathbf{a}}_{km}(N)/\hat{\mathbf{a}}_{km}(1) \end{array} \right]$$

où **â**$_{km}$(n) est la n$^{ième}$ composante de **â**$_{km}$
Le vecteur $\hat{b}_{km}$ est une fonction de ρ et s'exprime de la manière suivante :

$$\hat{b}_{km} = \mathbf{b}(t_k, x_m, y_m, z_m, \rho) + \mathbf{w}_{km}$$

$$(6)$$

$$\text{où } \mathbf{b}(t_k, x_m, y_m, z_m, \rho) = \begin{bmatrix} (\rho_2 \mathbf{v}_2(\theta_k, \Delta_k))/(\rho_1 \mathbf{v}_1(\theta_k, \Delta_k)) \\ \vdots \\ (\rho_N \mathbf{v}_N(\theta_k, \Delta_k))/(\rho_1 \mathbf{v}_1(\theta_k, \Delta_k)) \end{bmatrix}$$

Le vecteur $\hat{b}_{km}$ est construit à partir des composantes du vecteur $\hat{\mathbf{a}}_{km}(\rho)$. On choisit pour cela une voie de référence et on construit les composantes du vecteur comme étant le rapport entre les composantes du vecteur $\hat{a}_{km}$ et une voie de référence qui est associée par exemple à la 1$^{ère}$ composante de $\hat{a}_{km}$. L'équation (6) correspond au choix du capteur 1 comme capteur de référence.

Le vecteur $\hat{b}_{km}$ est ensuite transformé afin d'éliminer les composantes du vecteur complexe $\rho_n$. Pour cela, le procédé construit le vecteur $\hat{c}_{km}$ de dimension $(N-1)\times1$ en choisissant un instant de référence, par exemple $k=i$:

$$\hat{c}_{km} = \begin{bmatrix} \hat{\mathbf{b}}_{km}(1)/\hat{\mathbf{b}}_{im}(1) \\ \vdots \\ \hat{\mathbf{b}}_{km}(n)/\hat{\mathbf{b}}_{im}(n) \\ \vdots \\ \hat{\mathbf{b}}_{km}(N-1)/\hat{\mathbf{b}}_{im}(N-1) \end{bmatrix}$$

$$(7)$$

Ainsi en contexte de bruit faible $\|w_{km}\| \ll 1$, $\hat{c}_{km}(n)$ a l'expression suivante :

$$\hat{c}_{km}(n) \approx \frac{\tilde{\mathbf{v}}_n(\theta_k, \Delta_k, \boldsymbol{\rho})}{\tilde{\mathbf{v}}_n(\theta_i, \Delta_i, \boldsymbol{\rho})} + \tilde{\mathbf{w}}_k(n) \text{ où le vecteur perturbé non taré } \tilde{\mathbf{v}}_n(\theta, \Delta, \boldsymbol{\rho}) =$$

$$(8)$$

$$\frac{\rho_{n+1}}{\rho_1} \frac{\mathbf{v}_{n+1}(\theta_k, \Delta_k)}{\mathbf{v}_1(\theta_k, \Delta_k)}$$

avec:

$$\tilde{\mathbf{w}}_{km}(n) = \frac{\tilde{\mathbf{v}}_n(\theta_i, \Delta_i)\, \mathbf{w}_{km}(n) - \tilde{\mathbf{v}}_n(\theta_k, \Delta_k)\, \mathbf{w}_{im}(n)}{\left(\tilde{\mathbf{v}}_n(\theta_i, \Delta_i)\right)^2}$$

On remarque que le ratio $\tilde{\mathbf{v}}_n(\theta_k, \Delta_k, \rho)/\tilde{\mathbf{v}}_n(\theta_i, \Delta_i, \rho)$ est indépendant de p en valant :

$$\mathbf{G}_n(\theta_k, \Delta_k, \theta_l, \Delta_l) = \frac{\tilde{\mathbf{v}}_n(\theta_k, \Delta_k, \boldsymbol{\rho})}{\tilde{\mathbf{v}}_n(\theta_i, \Delta_i, \boldsymbol{\rho})} = \frac{\mathbf{v}_{n+1}(\theta_k, \Delta_k)}{\mathbf{v}_1(\theta_k, \Delta_k)} \frac{\mathbf{v}_1(\theta_i, \Delta_i)}{\mathbf{v}_{n+1}(\theta_i, \Delta_i)}$$

$$(9)$$

Dans ces conditions le vecteur $\hat{c}_{km}$ s'écrit de la manière suivante :

$$\hat{c}_{km} = \mathbf{c}(t_k, x_m, y_m, z_m) + \tilde{\mathbf{w}}_{km}$$

$$(10)$$

$$\text{où } \mathbf{c}(t_k, x_m, y_m, z_m) = \begin{bmatrix} G_1(\theta_k, \Delta_k, \theta_i, \Delta_i) \\ \vdots \\ G_{N-1}(\theta_k, \Delta_k, \theta_i, \Delta_i) \end{bmatrix}$$

et $\tilde{\mathbf{w}}_{km}(n)$ est la $n^{\text{ième}}$ composante de $\tilde{\mathbf{w}}_{km}$

Localisation de l'émetteur

Le procédé ayant déterminé le vecteur $\tilde{c}_{km}$, il l'utilise pour localiser les émetteurs, c'est-à-dire pour obtenir la position $(x_m, y_m, z_m)$ de l'émetteur. Pour cela le procédé maximise le critère de corrélation vectorielle normalisé $L_K(x, y, z)$ donné par l'expression (11) dans l'espace $(x, y, z)$ de position d'un émetteur.

$$L_K(x,y,z) = \frac{\left| \mathbf{c}_K^{\,H} \mathbf{v}_{K,c}(x,y,z) \right|^2}{\left( \mathbf{c}_K^{\,H} \mathbf{c}_K \right)\left( \mathbf{v}_{K,c}(x,y,z)^{H} \mathbf{v}_{K,c}(x,y,z) \right)}$$

avec

$$\mathbf{c}_K = \begin{bmatrix} \mathbf{c}_{1m} \\ \vdots \\ \mathbf{c}_{Km} \end{bmatrix} = \mathbf{v}_{K,c}(x_m, y_m, z_m) + \mathbf{w}_K \,, \quad \mathbf{v}_{K,c}(x,y,z) = \begin{bmatrix} \mathbf{c}(t_1, x, y, z) \\ \vdots \\ \mathbf{c}(t_K, x, y, z) \end{bmatrix}$$

et

$$\mathbf{w}_K = \begin{bmatrix} \tilde{\mathbf{w}}_{1m} \\ \vdots \\ \tilde{\mathbf{w}}_{Km} \end{bmatrix}$$

$$(11)$$

Afin d'affiner l'estimation de la position $(x_m, y_m, z_m)$ des émetteurs, le procédé peut être mis en oeuvre de façon itérative.
Pour cela, le procédé enchaîne par exemple les étapes suivantes :

Etape I1   Identification des vecteurs $c_{(K+1)m}$ à l'instant $t_{k+1}$.
Etape I2   Calcul du critère $L_{K+1}(x, y, z)$ de façon itérative et minimisation de $L_{K+1}(x, y, z)$ pour obtenir une nouvelle estimation de position $(x_m, y_m, z_m)$ de l'émetteur et rebouclage éventuel à l'étape précédente.

Le vecteur bruit $\mathbf{w}_K$ a pour matrice de covariance $\mathbf{R} = E[\mathbf{w}_K \mathbf{w}_K^{H}]$. En supposant que l'on connaisse cette matrice $\mathbf{R}$, le critère peut être envisagé avec une technique de blanchiment.
Dans ces conditions on obtient le critère $L_K'(x, y, z)$ suivant :

$$(12)$$

$$L_K'(x,y,z) = \frac{\left| \mathbf{c}_K^{\,H} \mathbf{R}^{-1} \mathbf{v}_{K,c}(x,y,z) \right|^2}{\left( \mathbf{c}_K^{\,H} \mathbf{R}^{-1} \mathbf{c}_K \right)\left( \mathbf{v}_{K,c}(x,y,z)^{H} \mathbf{R}^{-1} \mathbf{v}_{K,c}(x,y,z) \right)}$$

avec

$$R = E[\mathbf{w}_K \mathbf{w}_K^H]$$

**Autre variante de mise en oeuvre du procédé**

Selon une autre variante de réalisation, le procédé construit un vecteur $\hat{c}'_{km}$ de dimension $N$x1 à partir du vecteur directeur $\hat{\mathbf{a}}_{km}$. Pour cela, le procédé applique une transformation qui consiste, par exemple, à choisir un instant de référence k=i et à former les rapports des composantes du vecteur $\hat{\mathbf{a}}_{km}$ avec la composante correspondant à l'instant i. Le vecteur $\hat{c}'_{km}$ s'exprime alors de la manière suivante :

$$\hat{C}'_{km} = \begin{bmatrix} \hat{\mathbf{a}}_{km}(1)/\hat{\mathbf{a}}_{im}(1) \\ \vdots \\ \hat{\mathbf{a}}_{km}(n)/\hat{\mathbf{a}}_{im}(n) \\ \vdots \\ \hat{\mathbf{a}}_{km}(N)/\hat{\mathbf{a}}_{im}(N) \end{bmatrix} \qquad (13)$$

Ceci correspond à un suivi temporel des mesures du vecteur $\hat{\mathbf{a}}_k$.
Ainsi en contexte de bruit faible $\|\mathbf{e}_{km}\| \ll 1$, les composantes $\hat{c}'_{km}(n)$ de $\hat{c}'_{km}$ ont pour expressions :

$$\hat{C}'_{km}(n) \approx \frac{\mathbf{v}_n(\theta_k, \Delta_k)}{\mathbf{v}_n(\theta_i, \Delta_i)} + \tilde{\tilde{\mathbf{w}}}_{km}(n) \qquad (14)$$

avec:

$$\tilde{\tilde{\mathbf{w}}}_{km}(n) = \frac{\mathbf{v}_n(\theta_i, \Delta_i)\,\mathbf{e}_{km}(n) - \mathbf{v}_n(\theta_k, \Delta_k)\,\mathbf{c}_{im}(n)}{(\mathbf{v}_n(\theta_i, \Delta_i))^2}$$

Dans ces conditions le vecteur $\hat{C}'_{km}$ s'écrit de la manière suivante :

$$\hat{C}'_{km} = \mathbf{c}'(t_k, x_m, y_m, z_m) + \tilde{\tilde{\mathbf{w}}}_{km} \qquad \mathsf{I}(15)$$

où

$$\mathbf{c}'(t_k, x_m, y_m, z_m) = \begin{bmatrix} \mathbf{v}_1(\theta_k, \Delta_k)/\mathbf{v}_1(\theta_i, \Delta_i) \\ \vdots \\ \mathbf{v}_N(\theta_k, \Delta_k)/\mathbf{v}_N(\theta_i, \Delta_i) \end{bmatrix}$$

et $\tilde{\tilde{\mathbf{w}}}_{km}(n)$ est la $n$ième composante de $\tilde{\mathbf{w}}_{km}$

Dans le cas de fort défilement entre les mesures, le procédé peut déterminer des vecteurs $\hat{c}_{km}$ ou $\hat{c}'_{km}$ construits sur une fenêtre temporelle glissante (et non plus sur une fenêtre constante définie par un instant de référence comme c'est le cas dans la première variante) en prenant $i=k$-1 ou $i=k$-L, où L correspond à la longueur de la fenêtre (nombre d'échantillons de mesure considérés

La mesure des vecteurs directeurs $\hat{\mathbf{a}}_{km}$ est généralement obtenue à un facteur complexe près indéterminé. Pour la variante du procédé utilisant les vecteurs $\hat{c}'_{km}$, le procédé peut comporter une étape qui consiste à changer la référence de phase du vecteur directeur mesuré en choisissant une voie virtuelle en référence (et non pas une voie réelle comme c'est le cas dans la première variante) définie, par exemple, par le barycentre de phase (défini à un coefficient scalaire constant près que l'on peut fixer arbitrairement à 1). Cette opération est réalisée, par exemple, en appliquant sur les vecteurs mesurés $\hat{\mathbf{a}}_{km}$ la transformation suivante :

$$\hat{a}'_{km} = \left( \prod_i \frac{\hat{a}_{km}(i)}{|\hat{a}_{km}(i)|} \right)^{\frac{1}{N}} \hat{a}_{km} \qquad (16)$$

Le coefficient de correction n'est pas totalement déterminé par cette expression compte tenu de l'indétermination d'ordre N à chaque instant k de la racine complexe. Un suivi de l'évolution de phase pendant la période d'observation permet de lever l'indétermination, comme cela est décrit ci-après.

Le coefficient de correction complexe étant défini à un facteur près parmi les N racines N$^{iéme}$ de l'unité, le suivi de phase consiste à fixer arbitrairement le premier (k=1) coefficient de correction (en prenant la racine 1 par exemple), puis à déterminer à chaque nouvelle itération k+1, le coefficient de correction p, parmi les racines Néme de l'unité, qui minimise les écarts de phases moyens entre le vecteur directeur $\hat{\mathbf{a}}_{(k+1)m}$ mesuré à l'instant k+1 et le vecteur corrigé à l'instant k $\hat{\mathbf{a}}'_{km}$.

Le critère de minimisation, pour des mesures à la même fréquence, peut être défini par l'expression suivante :

$$\min_{\rho \in \sqrt[N]{1}} \sum_{l \in voie} \min \left( \operatorname{mod} \left( \left| \arg \left( \frac{\rho . \hat{a}_{k+1,m}(i)}{\hat{a}'_{km}(i)} \right) \right|, 2\pi \right), 2\pi - \operatorname{mod} \left( \left| \arg \left( \frac{\rho . \hat{a}_{k+1,m}(i)}{\hat{a}'_{km}(i)} \right) \right|, 2\pi \right) \right) \quad (17)$$

Pour des mesures à des fréquences différences, il est possible de comparer les phases des composantes des deux vecteurs directeurs en les corrigeant d'une puissance donnée par le rapport de ces deux fréquences.

Si l'on considère les vecteurs $\hat{c}'_{km}$, il est alors possible de les comparer aux valeurs théoriques $\mathbf{c}'(t_k, x_m, y_m, z_m)$ pour lesquelles le vecteur directeur théorique $\mathbf{a}(t_k, x_m, y_m, z_m)$ est calculé en référence à la voie virtuelle définie par le barycentre de phase (barycentre géométrique théorique de phase qui est le lieu géométrique pour lequel la somme théorique des différences de phase s'annule). Ce lieu ne coïncide pas, en général, avec le centre de phase du réseau (déterminé expérimentalement).

## Localisation de l'émetteur à partir des $\hat{c}'_{km}$

Le procédé de localisation comporte ensuite une étape qui consiste à maximiser le critère de corrélation vectorielle normalisé $L_K(x,y,z)$ suivant dans l'espace (x,y,z) de position d'un émetteur.

$$L_K(x,y,z) = \frac{\left| \mathbf{c}'_K{}^H \mathbf{v}_{K,c'}(x,y,z) \right|^2}{\left( \mathbf{c}'_K{}^H \mathbf{c}'_K \right) \left( \mathbf{v}_{K,c'}(x,y,z)^H \mathbf{v}_{K,c'}(x,y,z) \right)}$$

avec

$$\mathbf{c}'_K = \begin{bmatrix} \mathbf{c}'_{1m} \\ \vdots \\ \mathbf{c}'_{Km} \end{bmatrix} = \mathbf{v}_{K,c'}(x_m, y_m, z_m) + \mathbf{w}_K , \quad \mathbf{v}_{K,c'}(x,y,z) = \begin{bmatrix} \mathbf{c}'(t_1, x, y, z) \\ \vdots \\ \mathbf{c}'(t_K, x, y, z) \end{bmatrix} \quad (18)$$

et

$$\mathbf{w}_K = \begin{bmatrix} \tilde{\tilde{\mathbf{w}}}_{1m} \\ \vdots \\ \tilde{\tilde{\mathbf{w}}}_{Km} \end{bmatrix}$$

Pour obtenir la position $(x_m, y_m, z_m)$ de l'émetteur, le procédé calcule et maximise le critère $L_K(x,y,z)$ de l'équation (18).

Afin d'affiner l'estimation de la position $(x_m, y_m, y_m)$ des émetteurs les étapes du procédé peuvent être déroulées de manière itérative, par exemple de la manière suivante :

○ **Etape I3** Identification des vecteurs $\mathbf{c'}_{(K+1)m}$ à l'instant $t_{K+1}$.
○ **Etape I4** Calcul du critère $L_{K+1}(x,y,z)$ de façon itérative et minimisation de $L_{K+1}(x,y,z)$ pour obtenir une nouvelle estimation de position $(x_m, y_m, z_m)$ de l'émetteur.

Le vecteur bruit $\mathbf{w}_K$ a pour matrice de covariance $\mathbf{R} = E[\mathbf{w}_K \mathbf{w}_K^H]$. Pour une matrice $\mathbf{R}$, connue le critère peut être envisagé avec une technique de blanchiment.

Dans ces conditions on obtient le critère $L_{K'}(x,y,z)$ suivant :

$$L_{K'}(x,y,z) = \frac{\left| \mathbf{c'}_K^{\ H} \mathbf{R}^{-1} \mathbf{v}_{K,c'}(x,y,z) \right|^2}{\left( \mathbf{c'}_K^{\ H} \mathbf{R}^{-1} \mathbf{c'}_K \right)\left( \mathbf{v}_{K,c'}(x,y,z)^H \mathbf{R}^{-1} \mathbf{v}_{K,c'}(x,y,z) \right)} \qquad (19)$$

avec

$$\mathbf{R} = E[\mathbf{w}_K \mathbf{w}_K^H]$$

**Etape de filtrage**

Dans le cas d'un très grand nombre de mesures, le procédé peut comporter par exemple une étape de traitement préalable des vecteurs $a_k$ aux $K$ instants $t_k$. Ce traitement, exécuté avant les étapes de détermination des coefficients $\hat{c'}_{km}$ ou $\hat{c}_{km}$ permet de réduire la complexité numérique de calcul (qui est fonction du nombre de mesures) en diminuant $K$. A titre d'exemple, il est possible d'effectuer sur les mesures élémentaires les traitements suivants :

- décimation des instants $t_k$,

- filtrage (lissage des mesures $\hat{\mathbf{a}}_{km}$) et sous échantillonnage,

- fusion des mesures sur une durée définie (extraction par association de vecteur directeur et production de mesures de synthèse).

Dans la variante du procédé utilisant les vecteurs $\hat{c'}_{km}$, il est possible d'introduire un modèle sur la variation de niveau du signal reçu basé, par exemple, sur un modèle de propagation en espace libre.

Le procédé dans sa forme générale, par le recours aux critères de corrélation vectorielle entre mesures et modèles ($L_K(x,y,z)$ et $L_{K'}(x,y,z)$), peut prendre en compte d'autres modèles d'observation dérivés des vecteurs directeurs $a_k$.

En présence d'un réseau d'antennes appairées, on peut notamment définir un modèle d'observation combinant les vecteurs $\mathbf{b}_k$ et $\mathbf{c}_K$ ou $\mathbf{c'}_{km}$.

Selon une variante de réalisation, il est possible d'utiliser le procédé de filtrage décrit dans la demande de brevet FR 03/13128. Si le rapport de décimation est important (défilement non négligeable entre deux mesures filtrées), il est également possible de compléter la décimation par une estimation de la variation de vecteur directeur, et plus particulièrement de la vitesse de variation de la phase différentielle pour chacune des voies, et d'exploiter un modèle en distance basé sur cette variation.

En effet, la phase de chaque composante $\mathbf{b}_{k,n}$ du vecteur relatif $\mathbf{b}_k$ est fonction de l'incidence $(\theta_k, \Delta_k)$ et de l'angle $\alpha_n$ formé par l'axe défini par les positions des aériens des voies n et 1 avec la trajectoire du porteur.

Si $\gamma$ est l'angle formé par la direction d'incidence et la trajectoire du porteur (pseudo gisement), on a :

$$\mathbf{b}_{k,n} = \rho_{k,n} e^{j\Delta\varphi_n(t)} \text{ avec : } \Delta\varphi_n(t) = 2\pi \frac{d}{\lambda_0(t)} \cos(\gamma(t) + \alpha_n)$$

La variation instantanée de phase différentielle s'écrit alors :

$$\Delta\dot{\varphi}(t) = \frac{V}{D}.\sin(\theta_k).tg(\theta_k + \alpha_n).\Delta\varphi(t)$$

d'où l'on tire une relation à la distance de l'émetteur :

$$D(t) = \frac{V}{\Delta\dot{\varphi}(t)}.\sin(\theta_k).tg(\theta_k + \alpha_n).\Delta\varphi(t) \qquad (20)$$

Cette relation permet alors, en complément des vecteurs $\mathbf{b}_k$ ou $\mathbf{c}_k$ d'exploiter les estimations de variation instantanée de phase différentielle en introduisant un modèle de distance dans le critère de corrélation $L_K(x,y,z)$.

Dans le cas où $\gamma = 0$ (aériens dans l'axe du porteur), les relations s'écrivent :

$$\frac{\mathbf{b}_{k,n}}{|\mathbf{b}_{k,n}|} = \exp\left( j2\pi \frac{d}{\lambda}\cos(\theta(t_k,x_m,y_m,z_m))\cos(\Delta(t_k,x_m,y_m,z_m)) \right)$$

et

$$D(t) = \left( \cos(\theta) - \frac{1}{\cos(\theta)} \right)\frac{V}{\Delta\dot{\varphi}(t)}\Delta\varphi(t)$$

**Revendications**

1. Procédé de localisation d'un ou de plusieurs émetteurs à partir d'un réseau de capteurs en mouvement par rapport aux émetteurs **caractérisé en ce qu'**il comporte au moins les étapes suivantes :

    o déterminer les vecteurs directeurs $\hat{a}_k$ correspondant à la réponse du réseau de capteurs à une source d'incidence $(\theta, \Delta)$ en fonction des paramètres d'incidence $\theta$, $\Delta$, et du paramètre $\rho$ lié à la distorsion des phases sur les capteurs,
    o transformer ce vecteur $\hat{a}_k$ afin d'éliminer le paramètre inconnu $\rho$, en un vecteur transformé $\hat{c}_{km}$, $\hat{c}'_{km}$, en exécutant les étapes suivantes :

        choisir une voie ou capteur de référence et construire un vecteur $b(t_k,x_m,y_m,z_m,\rho)$ dont les composantes correspondent au rapport entre 2 voies,
$$\begin{bmatrix} (\rho_2\mathbf{v}_2(\theta_k,\Delta_k))/(\rho_1\mathbf{v}_1(\theta_k,\Delta_k)) \\ \vdots \\ (\rho_N\mathbf{v}_N(\theta_k,\Delta_k))/(\rho_1\mathbf{v}_1(\theta_k,\Delta_k)) \end{bmatrix}$$

        o choisir un instant de référence et construire à partir du vecteur $b(t_k,x_m,y_m,z_m,\rho)$ un vecteur dont les composantes sont :

$$\hat{C}_{km} = \begin{bmatrix} \hat{\mathbf{b}}_{km}(1)/\hat{\mathbf{b}}_{im}(1) \\ \vdots \\ \hat{\mathbf{b}}_{km}(n)/\hat{\mathbf{b}}_{im}(n) \\ \vdots \\ \hat{\mathbf{b}}_{km}(N-1)/\hat{\mathbf{b}}_{im}(N-1) \end{bmatrix}$$

o utiliser le vecteur transformé pour obtenir la position de l'émetteur en utilisant un critère de localisation maximisé, ledit critère étant. un critère de corrélation vectorielle normalisé $L_k(x, y, z)$ dans l'espace $(x, y, z)$ de position d'un émetteur avec :

$$L_K(x,y,z) = \frac{\left| \mathbf{c}_K^{\mathrm{H}} \mathbf{v}_{K,c}(x, y, z) \right|^2}{\left( \mathbf{c}_K^{\mathrm{H}} \mathbf{c}_K \right) \left( \mathbf{v}_{K,c}(x, y, z)^{\mathrm{H}} \mathbf{v}_{K,c}(x, y, z) \right)}$$

avec

$$\mathbf{c}_K = \begin{bmatrix} \mathbf{c}_{1m} \\ \vdots \\ \mathbf{c}_{Km} \end{bmatrix} = \mathbf{v}_{K,c}(x_m, y_m, z_m) + \mathbf{w}_K, \quad \mathbf{v}_{K,c}(x,y,z) = \begin{bmatrix} \mathbf{c}(t_1, x, y, z) \\ \vdots \\ \mathbf{c}(t_K, x, y, z) \end{bmatrix}$$

et

$$\mathbf{w}_K = \begin{bmatrix} \tilde{\mathbf{w}}_{1m} \\ \vdots \\ \tilde{\mathbf{w}}_{Km} \end{bmatrix} \quad \text{vecteur de bruit pour toutes les positions de l'émetteur}$$

2. Procédé selon la revendication 1 **caractérisé en ce qu'**il comporte les étapes itératives suivantes :

    **Etape I1** Identifier les vecteurs $\mathbf{c}_{(K+1)m}$ à l'instant $t_{k+1}$.
    **Etape I2** Calculer le critère $L_{K+1}(x,y,z)$ de façon itérative et minimiser $L_{K+1}(x,y,z)$ pour obtenir une nouvelle estimation de position $(x_m, y_m, z_m)$ de l'émetteur et rebouclage éventuel à l'étape I1 précédente.

3. Procédé selon la revendication 1 **caractérisé en ce que** l'étape de transformation comporte au moins les étapes suivantes :

    o choisir un instant de référence i, et
    o construire un vecteur $\hat{c}'_{km}$ dont les composantes correspondent au rapport des composantes entre l'instant donné k et l'instant i.

$$\hat{C}'_{km} = \begin{bmatrix} \hat{\mathbf{a}}_{km}(1)/\hat{\mathbf{a}}_{im}(1) \\ \vdots \\ \hat{\mathbf{a}}_{km}(n)/\hat{\mathbf{a}}_{im}(n) \\ \vdots \\ \hat{\mathbf{a}}_{km}(N)/\hat{\mathbf{a}}_{im}(N) \end{bmatrix}$$

**4.** Procédé selon la revendication 3 **caractérisé en ce que** le critère de localisation est égal à :

$$L_K(x,y,z) = \frac{\left| \mathbf{c'}_K^{\ H} \mathbf{v}_{K,c'}(x,y,z) \right|^2}{\left( \mathbf{c'}_K^{\ H} \mathbf{c'}_K \right) \left( \mathbf{v}_{K,c'}(x,y,z)^H \mathbf{v}_{K,c'}(x,y,z) \right)}$$

avec

$$\mathbf{c'}_K = \begin{bmatrix} \mathbf{c'}_{1m} \\ \vdots \\ \mathbf{c'}_{Km} \end{bmatrix} = \mathbf{v}_{K,\,c'}(x_m, y_m, z_m) + \mathbf{w}_K, \quad \mathbf{v}_{K,c'}(x,y,z) = \begin{bmatrix} \mathbf{c'}(t_1, x, y, z) \\ \vdots \\ \mathbf{c'}(t_K, x, y, z) \end{bmatrix}$$

et

$$\mathbf{w}_K = \begin{bmatrix} \tilde{\tilde{\mathbf{w}}}_{1m} \\ \vdots \\ \tilde{\tilde{\mathbf{w}}}_{Km} \end{bmatrix} \text{ vecteur de bruit pour toutes les composantes}$$

vecteur de bruit pour toutes les composantes

**5.** Procédé selon l'une des revendications 3 et 4 **caractérisé en ce qu'**il comporte les étapes itératives suivantes :

○ **Etape I3** Identification des vecteurs c'$_{(K+1)m}$ à l'instant $t_{K+1}$.
○ **Etape I4** Calcul du critère $L_{K+1}(x,y,z)$ de façon itérative et minimisation de $L_{K+1}(x,y,z)$ pour obtenir une nouvelle estimation de position ($x_m, y_m, z_m$) de l' émetteur.

**6.** Procédé selon la revendication 3 **caractérisé en ce que** l'on effectue un suivi de phase pour les vecteurs $\hat{c}'_{km}$.

**7.** Procédé selon l'une des revendications 1 à 6 **caractérisé en ce qu'**il comporte une étape de filtrage des vecteurs directeurs â$_k$.

**8.** Procédé selon l'une des revendications 1 à 7 **caractérisé en ce qu'**on utilise une fenêtre temporelle glissante en prenant i=k-1 ou i=k-L.

**Claims**

**1.** A method for locating one or more emitters from an array of sensors moving relative to said emitters **characterised in that** it comprises at least the following steps:

○ determining the direction vectors $\hat{a}_k$ corresponding to the response of the array of sensors to an incidence source ($\theta$, $\Delta$) as a function of incidence parameters $\theta$, $\Delta$, and of the parameter p associated with the phase distortion on the sensors,
○ converting said vector $\hat{a}_k$, so as to eliminate the unknown parameter $\rho$, into a converted vector $\hat{C}_{km}$, $\hat{C}'_{km}$ by executing the following steps:

○ selecting a reference channel or sensor and constructing a vector b($t_k$, $x_m$, $y_m$, $z_m$, p),the components of which correspond to the ratio between 2 channels
$$\begin{bmatrix} (\rho_2 v_2(\theta_k,\Delta_k))/(\rho_1 v_1(\theta_k,\Delta_k)) \\ \vdots \\ (\rho_N v_N(\theta_k,\Delta_k))/(\rho_1 v_1(\theta_k,\Delta_k)) \end{bmatrix}$$

o selecting a reference instant and constructing from the vector $b(t_k, x_m, y_m, z_m, \rho)$ a vector having the following components:

$$\hat{c}_{km} = \begin{bmatrix} \hat{b}_{km}(1)/\hat{b}_{km}(1) \\ \vdots \\ \hat{b}_{km}(n)/\hat{b}_{km}(n) \\ \vdots \\ \hat{b}_{km}(N-1)/\hat{b}_{km}(N-1) \end{bmatrix}$$

o using the converted vector to obtain the position of the emitter by using a maximised locating criterion, said criterion being a normalised vector correlation criterion $L_k(x, y, z)$ in the position space $(x, y, z)$ of a sensor with:

$$L_K(x,y,z) = \frac{\left| c_K^{\ H} v_{K,c}(x,y,z) \right|^2}{\left( c_K^{\ H} c_K \right)\left( v_{K,c}(x,y,z)^H v_{K,c}(x,y,z) \right)}$$

with

$$c_K = \begin{bmatrix} c_{1m} \\ \vdots \\ c_{Km} \end{bmatrix} = v_{K,c}(x_m,y_m,z_m) + w_K, \quad v_{K,c}(x,y,z) = \begin{bmatrix} c(t_1,x,y,z) \\ \vdots \\ c(t_K,x,y,z) \end{bmatrix}$$

and

$$w_K = \begin{bmatrix} \tilde{w}_{1m} \\ \vdots \\ \tilde{w}_{Km} \end{bmatrix}$$

being the noise vector for all of the positions of the sensor.

2. The method according to claim 1, **characterised in that** it comprises the following iterative steps:

Step I1: identifying the vectors $c_{(K+1)m}$ at instant $t_{k+1}$;
Step I2: calculating the criterion $L_{K+1}(x, y, z)$ in an iterative manner and minimising $L_{K+1}(x, y, z)$ so as to obtain a new estimate of the position $(X_m, Y_m, Z_m)$ of the sensor and possible loop connection to the preceding step I1.

3. The method according to claim 1, **characterised in that** the converting step comprises at least the following steps:

o selecting a reference instant i, and
o constructing a vector $\hat{C}'_{km}$, the components of which correspond to the ratio of the components between the given instant k and the instant i.

$$\hat{C}'_{km} = \begin{bmatrix} \hat{\mathbf{a}}_{km}(1)/\hat{\mathbf{a}}_{im}(1) \\ \vdots \\ \hat{\mathbf{a}}_{km}(n)/\hat{\mathbf{a}}_{im}(n) \\ \vdots \\ \hat{\mathbf{a}}_{km}(N)/\hat{\mathbf{a}}_{im}(N) \end{bmatrix}$$

**4.** The method according to claim 3, **characterised in that** the locating criterion is equal to:

$$L_K(x,y,z) = \frac{\left| \mathbf{c'}_K^{H} \mathbf{v}_{K,c'}(x,y,z) \right|^2}{\left( \mathbf{c'}_K^{H} \mathbf{c'}_K \right)\left( \mathbf{v}_{K,c'}(x,y,z)^H \mathbf{v}_{K,c'}(x,y,z) \right)}$$

with

$$\mathbf{c'}_K = \begin{bmatrix} \mathbf{c'}_{1m} \\ \vdots \\ \mathbf{c'}_{Km} \end{bmatrix} = \mathbf{v}_K, c'(x_m, y_m, z_m) + \mathbf{w}_K, \quad \mathbf{v}_{K,c'}(x,y,z) = \begin{bmatrix} \mathbf{c'}(t_1, x, y, z) \\ \vdots \\ \mathbf{c'}(t_K, x, y, z) \end{bmatrix}$$

and

$$\mathbf{w}_K = \begin{bmatrix} \tilde{\tilde{\mathbf{w}}}_{1m} \\ \vdots \\ \tilde{\tilde{\mathbf{w}}}_{Km} \end{bmatrix}$$

being the noise vector for all of the components.

**5.** The method according to any one of claims 3 to 4 **characterised in that** it comprises the following iterative steps:

oStep I3: identifying the vectors $c'_{(K+1)m}$ at instant $t_{K+1}$;
oStep I4: calculating the criterion $L_{K+1}(x, y, z)$ in an iterative manner and minimising $L_{K+1}(x, y, z)$ so as to obtain a new estimate of the position $(X_m, Y_m, Z_m)$ of the sensor.

**6.** The method according to claim 3, **characterised in that** a phase monitoring is performed for the vectors $\hat{C}'_{km}$.

**7.** The method according to anyone of claims 1 to 6, **characterised in that** it comprises a step of filtering the direction vectors $\hat{a}_k$.

**8.** The method according to any one of claims 1 to 7, **characterised in that** a sliding time window is used by taking i=k-1 or i=k-L.

**Patentansprüche**

**1.** Verfahren zum Verfolgen eines oder mehrerer Sender mit einem sich im Verhältnis zu den Sendern in Bewegung befindenden Sensornetzwerk, **dadurch gekennzeichnet, dass** es zumindest die folgenden Schritte umfasst:

o Bestimmung der Richtungsvektoren $\hat{a}_k$, die der Antwort des Sensornetzwerks auf eine Einfallsquelle (θ, Δ) in Abhängigkeit der Einfallsparameter θ, Δ entspricht, und des mit der Phasenverzerrung auf den Sensoren verbundenen Parameters p,

o Umwandlung dieses Vektors $\hat{a}_k$, um den unbekannten Parameter p zu entfernen, in einen umgewandelten Vektor $C_{km}$, $C'_{km}$, durch Absolvierung der folgenden Schritte:

o Auswahl eines Weges oder Referenzsensors und Aufbau eines Vektors $b(t_k,x_m,y_m,z_m,p)$, dessen Komponenten dem Verhältnis zwischen 2 Wegen

$$\begin{bmatrix} (\rho_2 \mathbf{v}_2(\theta_k,\Delta_k))/(\rho_1 \mathbf{v}_1(\theta_k,\Delta_k)) \\ \vdots \\ (\rho_N \mathbf{v}_N(\theta_k,\Delta_k))/(\rho_1 \mathbf{v}_1(\theta_k,\Delta_k)) \end{bmatrix}$$

entsprechen,

o Auswahl eines Referenzmoments und Aufbau, ausgehend vom Vektor $b(t_k,x_m,y_m,z_m,p)$, eines Vektors, dessen Komponenten

$$\hat{c}_{km} = \begin{bmatrix} \hat{b}_{km}(1)/\hat{b}_{km}(1) \\ \vdots \\ \hat{b}_{km}(n)/\hat{b}_{km}(n) \\ \vdots \\ \hat{b}_{km}(N-1)/\hat{b}_{km}(N-1) \end{bmatrix}$$

sind,

o Verwendung des umgewandelten Vektors, um durch Verwendung eines maximierten Verfolgungskriteriums die Position des Senders zu erhalten, wobei das Kriterium ein im Positionsraum (x, y, z) standardisiertes Vektorkorrelationskriterium $L_k(x, y, z)$ eines Senders mit:

$$L_K(x,y,z) = \frac{\left| \mathbf{c}_K^H \mathbf{v}_{K,c}(x,y,z) \right|^2}{\left( \mathbf{c}_K^H \mathbf{c}_K \right)\left( \mathbf{v}_{K,c}(x,y,z)^H \mathbf{v}_{K,c}(x,y,z) \right)}$$

wobei

$$\mathbf{c}_K = \begin{bmatrix} \mathbf{c}_{1m} \\ \vdots \\ \mathbf{c}_{Km} \end{bmatrix} = \mathbf{v}_{K,c}(x_m,y_m,z_m) + \mathbf{w}_K, \quad \mathbf{v}_{K,c}(x,y,z) = \begin{bmatrix} \mathbf{c}(t_1,x,y,z) \\ \vdots \\ \mathbf{c}(t_K,x,y,z) \end{bmatrix}$$

und

$$\mathbf{w}_K = \begin{bmatrix} \tilde{\mathbf{w}}_{1m} \\ \vdots \\ \tilde{\mathbf{w}}_{Km} \end{bmatrix}$$

Rauschvektor für alle Positionen des Senders ist.

2. Verfahren nach Anspruch 1, **dadurch gekennzeichnet, dass** es die folgenden iterativen Schritte umfasst:

Schritt I1 Identifizierung der Vektoren $\mathbf{c}_{(k+1)m}$ zum Zeitpunkt $t_{k+1}$.

Schritt I2 Iterative Berechnung des Kriteriums $L_{K+1}(x,y,z)$ und Minimierung von $L_{K+1}(x,y,z)$, um eine neue Positionsschätzung $(x_m, y_m, z_m)$ des Senders zu erhalten und eventuelle Rückkopplung an den vorangehenden Schritt I1.

**3.** Verfahren nach Anspruch 1, **dadurch gekennzeichnet, dass** der Schritt der Transformation zumindest die folgenden Schritte umfasst:

○ Auswahl eines Referenzzeitpunkts i, und
○ Aufbau eines Vektors $\hat{C}'_{km}$, dessen Komponenten dem Verhältnis der Komponenten zwischen dem gegebenen Zeitpunkt k und dem Zeitpunkt i entsprechen.

$$\hat{C}'_{km} = \begin{bmatrix} \hat{a}_{km}(1)/\hat{a}_{im}(1) \\ \vdots \\ \hat{a}_{km}(n)/\hat{a}_{im}(n) \\ \vdots \\ \hat{a}_{km}(N)/\hat{a}_{im}(N) \end{bmatrix}$$

**4.** Verfahren nach Anspruch 3, **dadurch gekennzeichnet, dass** das Verfolgungskriterium gleich

$$L_K(x,y,z) = \frac{\left| \mathbf{c'}_K^H \mathbf{v}_{K,c'}(x,y,z) \right|^2}{\left( \mathbf{c'}_K^H \mathbf{c'}_K \right) \left( \mathbf{v}_{K,c'}(x,y,z)^H \mathbf{v}_{K,c'}(x,y,z) \right)}$$

wobei

$$\mathbf{c'}_K = \begin{bmatrix} \mathbf{c'}_{1m} \\ \vdots \\ \mathbf{c'}_{Km} \end{bmatrix} = \mathbf{v}_{K,c'}(x_m, y_m, z_m) + \mathbf{w}_K, \quad \mathbf{v}_{K,c'}(x,y,z) = \begin{bmatrix} \mathbf{c'}(t_1, x, y, z) \\ \vdots \\ \mathbf{c'}(t_K, x, y, z) \end{bmatrix}$$

und

$$\mathbf{w}_K = \begin{bmatrix} \tilde{\tilde{\mathbf{w}}}_{1m} \\ \vdots \\ \tilde{\tilde{\mathbf{w}}}_{Km} \end{bmatrix}$$

Rauschvektor für alle Komponenten ist.

**5.** Verfahren nach einem der Ansprüche 3 und 4, **dadurch gekennzeichnet, dass** es die folgenden iterativen Schritte umfasst:

○ Schritt 13 Identifizierung der Vektoren $\mathbf{c'}_{(K+1)m}$ zum Zeitpunkt $t_{k+1}$.
○ Schritt 14 Iterative Berechnung des Kriteriums $L_{K+1}(x,y,z)$ und Minimierung von $L_{K+1}(x,y,z)$, um eine neue Positionsschätzung $(x_m, y_m, z_m)$ des Senders zu erhalten.

**6.** Verfahren nach Anspruch 3, **dadurch gekennzeichnet, dass** für die Vektoren $\hat{C}'_{km}$ eine Phasenverfolgung durchgeführt wird.

7. Verfahren nach einem der Ansprüche 1 bis 6, **dadurch gekennzeichnet, dass** es einen Filterschritt der Richtungsvektoren $\hat{a}_k$ aufweist.

8. Verfahren nach einem der Ansprüche 1 bis 7, **dadurch gekennzeichnet, dass** unter der Annahme i=k-1 oder i=k-L ein gleitendes Zeitfenster verwendet wird.

Avion 2 à l'instant $t_k$ de position $(x_k, y_k, z_k)$

Avion 2 à l'instant $t_{k+1}$ de position $(x_{k+1}, y_{k+1}, z_{k+1})$

Trajectoire

$\theta(t_{k+1}, M_0)$

$\theta(t_k, M_0)$

$\Delta(t_{k+1}, M_0)$

$\Delta(t_k, M_0)$

$y_0$

$x_0$

Emetteur 1 de position $M_0 = (x_0, y_0, z_0)$

FIG.1

$\theta(t, x, y, z)$

Plan des antennes

$\Delta(t, x, y, z)$

$k(\theta(t, x, y, z), \Delta(t, x, y, z))$

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0313128

**Littérature non-brevet citée dans la description**

- antenna array self calibration algorithm with sensor location errors. *IEEE,* 28 Octobre 2003, 225-228
- an adaptive Tracking Algorithm for Direction Finding and Array Shape Estimation in a Nonstationary Environment. VLSI signal Processing Systems for Signal, Image and Video Technology. Kluwer Academic Publishers, Octobre 1996, vol. 14

- An algorithm for the calibration of sensor arrays with sensor gain and phase uncertainties. *Statistical Signal and Array Processing, Mineapolis, Apr.27-30, 1993, proceedings of the international conference on acoustics speech and signal processing (ICASSP) New York,* 27 Avril 1993, vol. 4
- Mitigation of Wing Flexure for Airbone Direction-Finding Applications. *Signals, Systems and Computers, 1993, Conference Record of the twenty-seventh simolar conference on pacific grove,* 01 Novembre 1993, 1083-1090